# EUROPEAN PATENT SPECIFICATION

(11) **EP 2 804 691 B1**
(45) Date of publication and mention of the grant of the patent: **21.12.2016**
(21) Application number: 13707919.0
(22) Date of filing: 17.01.2013
(51) Int. Cl.: B01D 53/14

(54) **CONTROL OF A CHILLED AMMONIA PROCESS FOR CO2 REMOVAL FROM A FLUE GAS**
REGELUNG EINES GEKÜHLTEN AMMONIAKPROZESSES ZUR ABSORPTION VON CO2 AUS EINEM RAUCHGAS
RÉGULATION D'UN PROCÉDÉ D'AMMONIAC RÉFRIGÉRÉ POUR ÉLIMINER LE CO2 D'UN GAZ DE FUMÉE

(30) Priority: 18.01.2012 US 201213352750
(43) Date of publication of application: 26.11.2014
(73) Proprietor: General Electric Technology GmbH, 5400 Baden (CH)
(72) Inventor: HIWALE, Rameshwar S., Tulsa, OK 74137 US (US); KOSS, Ulrich, CH-8702 Zollikon (CH); NAUMOVITZ, Joseph P., Lebanon, New Jersey 08833 (US)
(74) Representative: General Electric Technology GmbH
(86) International application number: PCT/IB2013/050448
(87) International publication number: WO 2013/108213

(56) References cited:
- EP-A2- 2 269 713
- WO-A1-2006/022885
- WO-A1-2009/063041
- US-A- 3 338 664

## Description

### TECHNICAL FIELD

The present application relates to processes of CO₂ removal from a flue gas, the process comprising: (a) contacting in an absorber a flue gas comprising CO₂ with a CO₂ lean ammonia-comprising medium and/or regenerated CO₂ lean ammonia-comprising medium having an ammonia concentration, to absorb CO₂ from said flue gas into said CO₂ lean ammonia-comprising medium and/or regenerated CO₂ lean ammonia-comprising medium to produce a CO₂ rich ammonia-comprising medium; (b) heating the CO₂ rich ammonia-comprising medium to release CO₂ from said CO₂ rich ammonia-comprising medium to produce a regenerated CO₂ lean ammonia-comprising medium, the heating taking place at an operating pressure in a regeneration vessel having a sump; and (c) supplying the regenerated CO₂ lean ammonia-comprising medium to said absorber. The present application also relates to a system for removal of CO₂ from a flue gas, the system comprising: a CO₂ absorber adapted to contact a flue gas with CO₂ lean ammonia-comprising medium and/or regenerated CO₂ lean ammonia-comprising medium having an ammonia concentration, a regeneration vessel adapted to heat CO₂ rich ammonia-comprising medium from the CO₂ absorber at an operation pressure, a heating circuit arranged to provide a heating medium to the regeneration vessel, and piping arranged to pass CO₂ rich ammonia-comprising medium from the CO₂ absorber to the regeneration vessel and to pass regenerated CO₂ lean ammonia-comprising medium from the regeneration vessel to the CO₂ absorber.

### BACKGROUND ART

Environmental concern has created a demand for removal of carbon dioxide (CO₂ from, e.g., combustion gases, and subsequent processing or storage of the CO₂ to reduce CO₂ emissions to the atmosphere. In known technologies for ammonia based CO₂ capture, CO₂ is converted to, e.g., ammonium carbonate or ammonium bicarbonate in dissolved or solid form. It is known to regenerate ammonia based compounds used for CO₂ capture by release of CO₂ under controlled conditions.

WO 2006/022885 discloses one such method for removing carbon dioxide from a flue gas, which method includes capture of carbon dioxide from a flue gas in a CO₂ absorber by means of an ammoniated solution or slurry. The CO₂ is absorbed by the ammoniated solution in the absorber at a temperature of between about 0 °C and 20 °C, after
ammoniated solution in the absorber at a temperature of between about 0 °C and 20 °C, after which the ammoniated solution is regenerated in a regenerator at elevated pressure and temperature to allow the CO₂ to escape the ammoniated solution as gaseous carbon dioxide of high purity.

The regenerator is an important integrated system of the chilled ammonia process for CO2 capture. The regenerator is designed to strip CO2 from the CO2 rich ammoniated solution and to produce a CO2 lean solution for reuse for additional CO2 capture. The regenerator is further designed to operate under pressure and to produce a high purity pressurized CO2 gas stream. The CO2 stripping to regenerate the ammoniated solution typically occurs from a high strength ionic solution comprising NH3, NH4+, NH2CO2-, OH-, H+, CO2, HC03-, C032-, NH4HCO3, and potentially additional intermediate species. As discussed in WO 2009/063041 the addition of dimethylglycine to the ammonia solution increases the cycle capacity.

In the chilled ammonia process for CO₂ capture, the regeneration operation is important to ensure favorable process conditions. Thus, there is a need for improvements with regard to the control of the process.

### SUMMARY

It is an object to provide an improved manner of controlling the chilled ammonia process for CO₂ capture. A related object may be to obtain, or maintain, beneficial process conditions during operation of the chilled ammonia process, in particular in response to short term or long term changes to chemical or physical process parameters.

In one aspect, there is provided a process of CO₂ removal from a flue gas according to claim 1.

Thus, the process of this aspect is based on the surprising finding that, when operating at a certain regenerator pressure, the temperature of the regenerated CO₂ lean ammonia-comprising medium present in the sump of the regeneration vessel is an effective parameter to obtain a desired mole ratio of ammonia to CO₂ of the CO₂ lean ammonia-comprising medium and/or regenerated CO₂ lean ammonia-comprising medium.

In another aspect, there is provided a process of CO₂ removal from a flue gas according to claim 7.

Thus, the process of this aspect is based on the surprising finding that, when operating at a certain temperature of the regenerated CO₂ lean ammonia-comprising medium present in the sump of the regeneration vessel, the regenerator pressure is an effective parameter to obtain a desired mole ratio of ammonia to CO₂ of the CO₂ lean ammonia-comprising medium and/or regenerated CO₂ lean ammonia-comprising medium.

A flue gas may typically result from combustion of organic material, such as renewable or non-renewable fuels. However, in the present context the term "flue gas" may refer to a combustion gas as well as to any gas mixture comprising CO₂. Should a flue gas to be treated according to the present invention comprise chemical species or particles detrimental to the absorption of CO₂ using an ammonia-comprising medium, or to other features of the disclosed processes, such species or particles may be initially removed by separation technologies known to a person skilled in the art. Examples of such pre-treatments are given in, e.g., WO 2006/022885 referred to above.

As used herein, the term "ammonia-comprising medium" refers to any medium used to absorb CO₂, which includes ammonia, ammonium, or any compounds or mixtures comprising ammonia or ammonium. As an example, the CO₂ absorption may take place in an aqueous medium where the ammonia can be in the form of ammonium ion, NH₄⁺, or in the form of dissolved molecular NH₃. Contacting the flue gas comprising CO₂ with an ammonia-comprising medium results in formation of ammonium carbonate or ammonium bicarbonate in dissolved or solid form. In other words, as often used in the art, CO₂ is absorbed by the ammonia-comprising medium and thus removed from the flue gas. The ammonia-comprising medium of the present invention may be prepared by dissolution or mixing of ammonia or an ammonium compound such as ammonium carbonate in water. The term "medium" refers to a solution as well as to a suspension or slurry. The reaction mechanism when CO₂ reacts with an aqueous ammonia solution involves the following reactions.

2H₂O ↔ H₃O⁺ + OH⁻ (1)

CO₂ + 2H₂O ↔ H₃O⁺ + HCO₃⁻ (2)

HCO₃⁻ + H₂O ↔ H₃O⁺ + CO₃²⁻ (3)

NH₃ + H₂O ↔ NH₄⁺ + OH⁻ (4)

NH₃ + HCO₃⁻ ↔ H₂O + NH₂COO⁻ (5)

NH₄HCO₃(s) ↔ HCO₃⁻ + NH₄⁺ (6)

As used herein, the term "ammonia concentration" refers to the total concentration in the ammonia-comprising medium of all ammonia related species. The ammonia concentration is thus also known as the solution molarity of the ammonia-comprising medium.

The recited process is applicable when the CO₂ absorption is operating according to the so-called chilled ammonia process wherein the flue gas is cooled below ambient (room) temperature before entering the CO₂ absorber. For example, the flue gas contacted with the ammonia-comprising medium may be at a temperature below 25 °C, preferably below 20 °C, and optionally below 10 °C. The ammonia-comprising medium may as well be cooled below ambient (room) temperature before entering the CO₂ absorber. For example, the ammonia-comprising medium with which contacts the flue gas may be at a temperature below 25 °C, preferably below 20 °C, and optionally below 10 °C.

Ammonia present in the CO₂ depleted flue gas after the flue gas CO₂ is absorbed into the ammonia-comprising medium, e.g., ammonia carried over from the ammonia-comprising medium, may be removed from the flue gas by condensation. Such condensation may take place in a condenser or scrubber, e.g., by acid or water wash, or by other direct contact or indirect contact heat exchange.

The regenerator vessel, together with its auxiliary equipment such as heat exchangers for maintaining a desired temperature of CO₂ rich ammonia-comprising medium entering the regenerator vessel and/or of CO₂ lean ammonia-comprising medium in the regenerator vessel sump, is designed to generate high-pressure, high purity gaseous CO₂ (such as ~>99 % or ~>99.5 %) while suppressing the generation of gaseous ammonia and water. The regeneration of CO₂ lean ammonia-comprising medium is an endothermic process and the thermal energy needed for the regeneration is the by far main energy consumer of the chilled ammonia process. Heat is required to break the energy bond between the absorbed CO₂ and the absorbing solution, and to build up (partial) pressure to drive the CO₂ out of the regenerator column. Released CO₂ may optionally be further processed or stored as suitable in view of technical, economical or environmental concerns. It is typically maintained a temperature of regenerated CO₂ lean ammonia-comprising medium present in the sump of the regenerator vessel of from about 100 to about 160 °C.

The regenerator vessel may operate within a wide pressure range. It is desirable to operate at a pressure higher than atmospheric pressure, such as from about 5 to about 35 bar gauge (barg). It may be preferred to operate at a pressure higher than 10 barg. Ammonia emission from the regenerator decreases at increasing operating pressure. Due to the high regeneration pressure, the ammonia formed during CO₂ lean ammonia-comprising medium regeneration is captured in the medium from which CO₂ is released. Thus, release, or loss, of ammonia is suppressed.

For purposes of process control, a desired mole ratio of ammonia to CO₂ of the ammonia-comprising medium brought into contact with the flue gas is identified. As used herein, the term "mole ratio of ammonia to CO₂" refers to the ratio of the total moles of NH₃ to the total moles of CO₂ present in the CO₂ lean ammonia-comprising medium. The term mole ratio of ammonia to CO₂ thus equals the "R value", commonly referred to in the art. Using another term common in the art, the term mole ratio of ammonia to CO₂ may also be expressed reciprocally as the "loading", i.e., loading equals 1/*R*. The terms "*R* value" and "mole ratio of ammonia to CO₂" are used interchangeably throughout the text. The term "loading" is used for the reciprocal of the "R value" or the "mole ratio of ammonia to CO₂" throughout the text.

Overall CO₂ removal efficiency in the absorber system is strongly related to the R value of the CO₂ lean ammonia-comprising medium and/or regenerated CO₂ lean ammonia-comprising medium brought into contact with the flue gas. Ammonia slip from the absorber system, i.e. ammonia carried over from the CO₂ lean ammonia-comprising medium and/or regenerated CO₂ lean ammonia-comprising medium and being present in the CO₂ depleted flue gas after CO₂ absorption, is strongly related to the *R* value of the CO₂ lean ammonia-comprising medium and/or regenerated CO₂ lean ammonia-comprising medium brought into contact with the flue gas. The CO₂ removal efficiency as well as the ammonia slip contributes to the performance of the CO₂ removal process. Based on the relationships mentioned, a desired mole ratio of ammonia to CO₂ of the CO₂ lean ammonia-comprising medium and/or regenerated CO₂ lean ammonia-comprising medium brought into contact with the flue gas is identified so that the desired performance of the process may be achieved. In particular, the desired mole ratio may be identified to maintain a desired CO₂ capture efficiency and/or to maintain an acceptable ammonia slip from the absorber system. A change in process parameters, such as a change in flow rate of the flue gas entering the absorber and/or a change of the CO₂ concentration of the flue gas entering the absorber, can thus be met by the identification of an *R* value of the CO₂ lean ammonia-comprising medium and/or regenerated CO₂ lean ammonia-comprising medium to maintain the desired process performance. The *R* value of the CO₂ lean ammonia-comprising medium and/or regenerated CO₂ lean ammonia-comprising medium brought into contact with the flue gas is typically from 2 to 5. Identification of a desired mole ratio of ammonia to CO₂ may be performed as an automated action by, e.g., a computer, as a manual action or as a combination thereof.

Obtaining the *R* value of the CO₂ lean ammonia-comprising medium and/or regenerated CO₂ lean ammonia-comprising medium brought into contact with the flue gas is thus important to achieve a desired CO₂ capture rate with acceptable ammonia emissions at a particular flue gas flow rate. It has been found by the present inventors that, in a process as described herein and operating at a given ammonia concentration of the CO₂ lean ammonia-comprising medium and/or regenerated CO₂ lean ammonia-comprising medium, a correlation exists among the temperature of the regenerated CO₂ lean ammonia-comprising medium present in the sump of the regeneration vessel, the operating pressure of the regeneration vessel and the desired R value. The properties and validation of this correlation will be further detailed in the following Examples. In order to allow for control of the process, so that the desired R value may be reached, a desired temperature of regenerated CO₂ lean ammonia-comprising medium present in the sump of the regeneration vessel and/or a desired operating pressure of the regeneration vessel may thus be predicted. Typically, it may be preferred to maintain the operating pressure of the regeneration vessel. In such situation, a desired temperature of regenerated CO₂ lean ammonia-comprising medium present in the sump of the regeneration vessel is predicted by means of the ammonia concentration of the CO₂ lean ammonia-comprising medium and/or regenerated CO₂ lean ammonia-comprising medium, the operating pressure of the regeneration vessel and the identified mole ratio/R value. In another situation, it may be preferred to maintain the temperature of regenerated CO₂ lean ammonia-comprising medium present in the sump of the regeneration vessel. In such situation, a desired operating pressure of the regeneration vessel is predicted by means of the ammonia concentration of the CO₂ lean ammonia-comprising medium and/or regenerated CO₂ lean ammonia-comprising medium, the temperature of regenerated CO₂ lean ammonia-comprising medium present in the sump of the regeneration vessel and the identified mole ratio. In some situations it may be preferred to change the temperature of regenerated CO₂ lean ammonia-comprising medium present in the sump of the regeneration vessel as well as of the operating pressure of the regeneration vessel in order to reach the desired mole ratio of the CO₂ lean ammonia-comprising medium and/or regenerated CO₂ lean ammonia-comprising medium brought into contact with the flue gas. In such situation a desired temperature of regenerated CO₂ lean ammonia-comprising medium present in the sump of the regeneration vessel and a desired operating pressure of the regeneration vessel may be predicted by means of the ammonia concentration of the CO₂ lean ammonia-comprising medium and/or regenerated CO₂ lean ammonia-comprising medium and the identified mole ratio. Predication of a desired operating pressure of the regeneration vessel may be performed as an automated action by, e.g., a computer, as a manual action or as a combination thereof.

By controlling the conditions of regeneration, the desired mole ratio of ammonia to CO₂ of the CO₂ lean ammonia-comprising medium and/or regenerated CO₂ lean ammonia-comprising medium brought into contact with the flue gas may be reached. A desired temperature of regenerated CO₂ lean ammonia-comprising medium present in the sump of the regeneration vessel may be predicted and used to control the temperature of regenerated CO₂ lean ammonia-comprising medium present in the sump of the regeneration vessel based on said predicted temperature. A person skilled in the art is aware of means suitable for controlling the temperature of regenerated CO₂ lean ammonia-comprising medium present in the sump of the regeneration vessel. Typically, regenerated CO₂ lean ammonia-comprising medium present in the sump of the regeneration vessel is circulated through a heat exchanger, such as a reboiler, and back to the sump of the regeneration vessel. Temperature and flow rate of heating medium fed to the heat exchanger, as well as flow rate of the circulated medium, are adjusted to obtain the predicted desired temperature. A desired operating pressure of the regeneration vessel may likewise be predicted and used in controlling the operating pressure of the regeneration vessel based on said predicted operating pressure. A person skilled in the art is aware of means suitable for controlling the operating pressure of the regeneration vessel. Typically, a pressure regulating valve on the regenerator gas outlet is used for controlling said operating pressure. Control of the regeneration vessel operating pressure may be performed as an automated action by, e.g., a computer, as a manual action or as a combination thereof.

The pressure of CO₂ released from the heating of the CO₂ rich ammonia-comprising medium is higher in a chilled ammonia process than for other post combustion technologies, resulting in a significant reduction of electrical power consumption (up to 60 %) associated with downstream CO₂ compression. The operating pressure of the regeneration vessel can be adjusted to optimize the overall integration of the carbon capture process with a power plant.

The subject processes and system described herein, is very convenient for use in the operation of a carbon capture plant. As an example, it is a great benefit to plant operators in setting the regenerator sump temperature for a given performance. By operating the CO₂ capture process according to the processes and system herein, CO₂ balance as well as solution molarity may be maintained.

According to each of the aspects mentioned above, the identification of the desired mole ratio may comprise determining a flow rate of CO₂ entering the absorber in the flue gas and determining online a flow rate of CO₂ released from the regeneration vessel. Thus, process deviations from a CO₂ balance between CO₂ entering the absorber (in the flue gas) and CO₂ released from the regeneration vessel may serve as input for the identification of a desired *R* value. Determination of the flow rate of CO₂ entering the absorber in the flue gas may be performed by determining the flow rate of the flue gas entering the absorber and determining the CO₂ concentration of the same flue gas. Determination of the flow rate of CO₂ released from the regeneration vessel may correspond to determination of the flow rate of the gas released from the regeneration vessel since the gas released from the regeneration vessel is essentially CO₂. Determination of a flow rate as referred to herein typically means determination of a volume flow rate.

According to each of the aspects mentioned above, the identification of the desired mole ratio comprises determining the CO₂ concentration of flue gas entering the absorber and determining the CO₂ concentration of flue gas leaving the absorber. Such dictates the CO₂ capture efficiency. Thus, the CO₂ capture efficiency of the process may serve as input for the identification of a desired R value.

According to each of the aspects mentioned above, the identification of the desired mole ratio comprises determining the ammonia concentration of flue gas leaving the absorber. Thus, ammonia emissions from the process may serve as input for the identification of a desired *R* value. The ammonia emission levels from the absorber may amount to an ammonia concentration in the flue gas leaving the absorber of from about 4,000 to about 15,000 ppm. The ammonia emission may depend on the *R* value of the CO₂ lean ammonia-comprising medium and/or regenerated CO₂ lean ammonia-comprising medium brought into contact with the flue gas and on the operating temperature of the absorber, e.g., on the temperature of the flue gas contacted with the CO₂ lean ammonia-comprising medium and/or regenerated CO₂ lean ammonia-comprising medium in the absorber.

The determination of one or more of the gas properties described above, i.e., flow rates and/or concentrations, may be performed online. Determination "online" of gas properties as described above means a determination of gas properties through the use of a sensor or instrument present on or in the process equipment and/or conduits thereof. Such sensors or instruments are useful to provide continuously updated data regarding the gas flowing in said process equipment and/or conduits. Sensors and instruments for online determination of CO₂ concentration and gas flow rates are well known to a person skilled in the art. Identifying a desired *R* value based on such gas properties is less complicated and faster than identifying it based on chemical analyses of the CO₂ lean ammonia-comprising medium and/or regenerated CO₂ lean ammonia-comprising medium. The desired *R* value may be determined based on one or more of the gas properties mentioned above.

In another aspect, there is provided a system for removal of CO₂ from a flue gas, the system comprising:

a CO₂ absorber adapted to contact a flue gas with CO₂ lean ammonia-comprising medium and/or regenerated CO₂ lean ammonia-comprising medium having an ammonia concentration, a regeneration vessel adapted to heat CO₂ rich ammonia-comprising medium from the CO₂ absorber at an operation pressure, a heating circuit arranged to provide a heating medium to the regeneration vessel, and piping arranged to pass CO₂ rich ammonia-comprising medium from the CO₂ absorber to the regeneration vessel and to pass regenerated CO₂ lean ammonia-comprising medium from the regeneration vessel to the CO₂ absorber;

wherein the system further comprises a regulating valve arranged to control a flow of heating medium in the heating circuit, a pressure indicator arranged to provide a signal representing the operating pressure of the regeneration vessel, and a control unit arranged to receive the signal from the pressure indicator, a signal representing the ammonia concentration of the CO₂ lean ammonia-comprising medium and/or regenerated CO₂ lean ammonia-comprising medium and a signal representing a desired mole ratio of ammonia to CO₂ of the CO₂ lean ammonia-comprising medium and/or regenerated CO₂ lean ammonia-comprising medium brought in contact with the flue gas in the CO₂ absorber, to determine an adjustment for the regulating valve based on the signals received, and to provide the regulating valve with a signal corresponding to the determined adjustment.

Thus, the system of this aspect is based on the surprising finding that, when operating at a certain regenerator pressure, the supply of heating medium, typically the supply of steam for indirect heating, to the regenerator vessel is an effective means for manipulation to achieve a desired R value.

Definitions of terms, alternative embodiments, advantages and other considerations presented above in connection with the processes and systems of the previous aspects apply also to the system of this aspect, to the extent applicable. The system may likewise comprise one or more of the features discussed below. As used herein, the term "indicator" refers, e.g., to a sensor or instrument as described above useful for online determinations of gas properties.

The signal representing the ammonia concentration of the CO₂ lean ammonia-comprising medium and/or regenerated CO₂ lean ammonia-comprising medium may be provided by an input unit using manual input of the ammonia concentration, may be provided by an input unit with automatic input of the ammonia concentration from an instrument analyzing the ammonia concentration of the ammonia-comprising liquid, or may be provided by the analyzing instrument itself. Thus, the system may comprise such input unit and/or instrument. The control unit may be loaded with a representation, such as a table, typically comprising parameters and/or functions representing a correlation between the temperature of the CO₂ lean ammonia-comprising medium and/or regenerated CO₂ lean ammonia-comprising medium, the operating pressure of the regenerator vessel and the desired lean solution R value.

The system may further comprise a gas flow rate indicator and a CO₂ concentration indicator, arranged to provide signals representing a flow rate of flue gas to the CO₂ absorber and the CO₂ concentration of said flue gas, respectively. Further, a gas flow rate indicator may be arranged to provide a signal representing a flow rate of gas leaving the regeneration vessel. The control unit may further be arranged to receive signals from each of the said indicators and based on said signals to determine, and optionally relay, a signal representing a desired mole ratio of ammonia to CO₂ of the CO₂ lean ammonia-comprising medium and/or regenerated CO₂ lean ammonia-comprising medium brought in contact with the flue gas in the CO₂ absorber. Additionally, any system deviations from CO₂ balance may serve as input for the control unit.

The system may further comprise a gas flow rate indicator and a CO₂ concentration indicator arranged to provide signals representing a flow rate of flue gas leaving the CO₂ absorber and the CO₂ concentration of said flue gas, respectively. The control unit may further be arranged to receive signals from each of the said indicators and based on said signals to determine, and optionally relay, a signal representing a desired mole ratio of ammonia to CO₂ of the CO₂ lean ammonia-comprising medium and/or regenerated CO₂ lean ammonia-comprising medium brought in contact with the flue gas in the CO₂ absorber. Thus, the CO₂ capture efficiency of the system may also serve as input for the control unit.

The system may further comprise a NH₃ concentration indicator arranged to provide a signal representing the NH₃ concentration of flue gas leaving the CO₂ absorber, the control unit being further arranged to receive said signal and to determine based on said signal received the adjustment for the regulating valve. Thus, ammonia emissions from the system may serve as input to the control unit. Typically, the control unit is arranged to immediately provide a signal to the regulating valve to decrease the flow of heating medium if the NH₃ concentration of flue gas leaving the CO₂ absorber is above a set threshold value, such as 10,000 ppm.

### BRIEF DESCRIPTION OF THE DRAWINGS

Figure 1 is a schematic representation of a system for an ammonium based CO₂ capture process.
Figures 2a and 2b are graphs illustrating the correlation described in Example 1.
Figures 3a and 3b are parity plots illustrative for Example 2.
Figure 4 is a graph illustrating the correlation described in Example 3.

### DETAILED DESCRIPTION

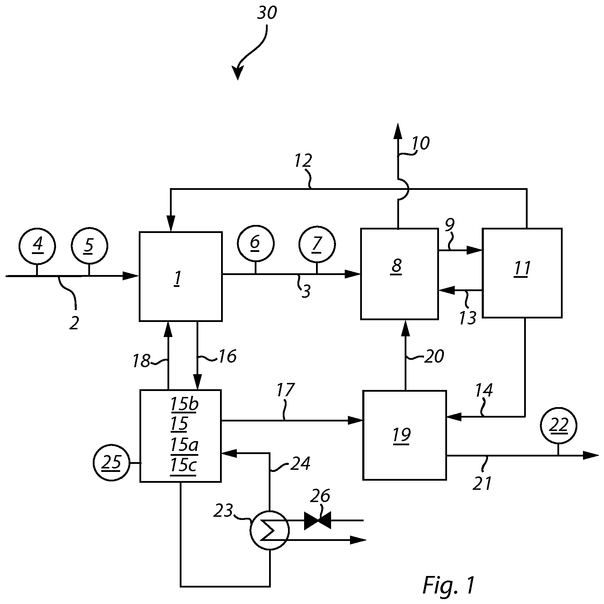

Figure 1 is a schematic representation of a system 30 for an ammonium based CO₂ capture process. The system 30 comprises a CO₂ absorber vessel 1. CO₂ absorber vessel 1 may be arranged as a plurality of vessels or operational steps in parallel or in series. Flue gas from which CO₂ is to be removed, is fed into CO₂ absorber vessel 1 via fluidly connected line 2. In CO₂ absorber vessel 1, the flue gas is contacted with a CO₂ lean ammonia-comprising medium and/or regenerated CO₂ lean ammonia-comprising medium, e.g. by bubbling the flue gas through said medium or by spraying the medium into the flue gas. It is within the knowledge of a skilled person to arrange for contacting of flue gas with ammonia-comprising medium. In CO₂ absorber vessel 1, CO₂ from the flue gas is absorbed into the CO₂ lean ammonia-comprising medium and/or regenerated CO₂ lean ammonia-comprising medium, e.g. by formation of carbonate or bicarbonate of ammonium either in dissolved or solid form. Flue gas depleted of CO₂ leaves CO₂ absorber vessel 1 via fluidly connected line 3. As used herein, CO₂ lean ammonia-comprising medium and/or regenerated CO₂ lean ammonia-comprising medium is any medium used to absorb CO₂, which includes ammonia, ammonium, or any compounds or mixtures comprising ammonia or ammonium. As an example, the CO₂ absorption may take place in an aqueous medium where the ammonia can be in the form of ammonium ion, NH₄⁺, or in the form of dissolved molecular NH₃.

Line 2 is equipped with a gas flow meter 4 and a CO₂ concentration sensor 5. The measurements from gas flow meter 4 and CO₂ concentration sensor 5 allow for a determination of the flow rate of CO₂ entering CO₂ absorber vessel 1. Line 3 is equipped with a CO₂ concentration sensor 6. The measurements from gas flow meter 4 and CO₂ concentration sensor 6 allow for a determination of the flow rate of CO₂ leaving CO₂ absorber vessel 1. Comparing the flow rates of CO₂ entering and leaving, respectively, CO₂ absorber vessel 1 allows for a determination of the CO₂ capture efficiency of CO₂ absorber vessel 1. Additionally, or alternatively, line 3 is equipped with a NH₃ concentration sensor 7. The measurement from NH₃ concentration sensor 7 provides information on possible ammonia loss from CO₂ absorber vessel 1.

The system 30 further comprises a water wash system 8. Water wash system 8 may be arranged as a plurality of vessels or operational steps in parallel or in series. Water wash system 8 may comprise one or more packed beds being similar or different. Via line 3, flue gas from CO₂ absorber vessel 1 enters water wash system 8. In water wash system 8, ammonia present in the flue gas is captured in water wash liquid. Captured ammonia in water wash liquid leaves water wash system 8 via fluidly connected line 9. Flue gas depleted of ammonia leaves water wash system 8 via fluidly connected line 10.

The system 30 further comprises a stripper system 11 for stripping of NH₃. Stripper system 11 may be arranged as a plurality of vessels or operational steps in parallel or in series. Via fluidly connected line 9, captured ammonia in water wash liquid enters stripper system 11. In stripper system 11, ammonia is recovered from the water wash liquid and reconditioned water wash liquid is obtained. Recovered ammonia leaves stripper system 11 via fluidly connected line 12 and is returned to CO₂ absorber vessel 1. Reconditioned water wash liquid leaves stripper system 11 via fluidly connected line 13 and is returned to water wash system 8. Reconditioned water wash liquid also leaves stripper system 11 via fluidly connected line 14 and is passed to a CO₂ product cooler 19 described in more detail below.

The system 30 further comprises a regenerator vessel 15. Regenerator vessel 15 may be arranged as a plurality of vessels or operational steps in parallel or in series. CO₂ rich ammonia-comprising medium, including dissolved or solid carbonate or bicarbonate of ammonium as formed in CO₂ absorber vessel 1, enters regenerator vessel 15 via fluidly connected line 16. In regenerator vessel 15, the CO₂ rich ammonia-comprising medium is exposed to temperature and pressure conditions sufficient to release CO₂ from the CO₂ rich ammonia-comprising medium to obtain regenerated CO₂ lean ammonia-comprising medium. Basically, carbonate or bicarbonate of ammonium either in dissolved or solid form is decomposed to release CO₂ as a gas. It is within the knowledge of a skilled person to obtain such conditions, e.g. utilising heat exchangers and pumps. As an example, CO₂ rich ammonia-comprising medium is fed at elevated temperature to the lower section 15a of the regenerator vessel 15. The regenerator vessel 15 may consist of two or three packed sections. At this temperature, some of the bicarbonates decompose, releasing CO₂ gas to the regenerator vessel 15. The remainder of the CO₂ rich ammonia-comprising medium is contacted with rising hot vapour generated in the regenerator vessel 15 reboiler 23 as described in more detail below. At increasing temperatures, more bicarbonates decompose, releasing primarily CO₂ and very small amounts of NH₃ and H₂O to the vapour phase. Released CO₂ leaves regenerator vessel 15 via fluidly connected line 17. Regenerated CO₂ lean ammonia-comprising medium is returned to CO₂ absorber vessel 1 via fluidly connected line 18. Make-up ammonia may, if necessary, be introduced via fluidly connected line 18.

The system 30 further comprises a CO₂ product cooler 19, a purpose of which is to recover ammonia leaving regenerator vessel 15 along with released CO₂. CO₂ product cooler 19 may be arranged as a plurality of vessels or operational steps in parallel or in series. Via fluidly connected line 17, gas comprising CO₂ from regenerator vessel 15 enters CO₂ product cooler 19. In CO₂ product cooler 19, ammonia present in the gas is condensed to obtain condensed ammonia. Condensed ammonia typically dissolves in water, said water condensed from water vapour present in gas leaving regenerator vessel 15. As an example, CO₂ rich gas from the top 15b of the regenerator vessel 15 is sent to the CO₂ product cooler 19 where it is cooled to about 20-40 °C by direct contact with cold circulating water to further reduce the NH₃ content of the gas and to condense residual moisture. The CO₂ product cooler 19 receives stripped water via fluidly connected line 14 from the stripper system 11, which favours absorption of ammonia. Dissolved ammonia leaves CO₂ product cooler 19 via fluidly connected line 20 and is passed to wash water system 8. Essentially pure CO₂ leaves CO₂ product cooler 19 via fluidly connected line 21.

Line 21 is equipped with a gas flow meter 22. The measurement of gas flow meter 22 represents the flow rate of CO₂ leaving CO₂ product cooler 19. Comparing the flow rates of CO₂ entering CO₂ absorber vessel 1 and leaving CO₂ product cooler 19 allows for determination of the CO₂ balance of the illustrated CO₂ capture system 30.

The operating temperature of bottom portion 15a of regenerator vessel 15 is controlled by passing regenerated CO₂ lean ammonia-comprising medium through a heat exchanger 23 and returning the regenerated CO₂ lean ammonia-comprising medium to regenerator vessel 15 via fluidly connected line 24. Heat exchanger 23, typically a reboiler, may be arranged on line 24, as illustrated, or in a vessel comprising regenerator vessel 15. A pressure sensor 25 measures the operating pressure of the regenerator vessel 15.

Measurements from one or more flow meters 4, 22 and/or sensors 5, 6, 7, 25 and/or determinations based on said measurements, serve as input for identification of a desired mole ratio of ammonia to CO₂ of the CO₂ lean ammonia-comprising medium and/or regenerated CO₂ lean ammonia-comprising medium brought into contact with the flue gas in CO₂ absorber vessel 1. Identification may be performed by a control unit (not shown) in connection with said sensors. By means of the ammonia concentration of the CO₂ lean ammonia-comprising medium and/or regenerated CO₂ lean ammonia-comprising medium, the operating pressure of the regenerator vessel 15 and the mole ratio identified, a desired temperature of regenerated CO₂ lean ammonia-comprising medium present in the sump 15c of the regeneration vessel 15 is predicted. Predication may be performed by the control unit, when the control unit is provided with a representation of the correlation found by the present inventors (as mentioned above and further exemplified below). Control of said temperature is performed by regulating the flow of heating medium to heat exchanger 23, i.e. typically of steam to a reboiler. Control may be performed by the control unit, the control unit being in direct or wireless contact with a valve 26 regulating the flow of heating medium to heat exchanger 23.

As described above, CO₂ rich ammonia-comprising medium, including dissolved or solid carbonate or bicarbonate of ammonium, is fed from CO₂ absorber vessel 1 to regenerator vessel 15, whereas regenerated CO₂ lean ammonia-comprising medium is fed from regenerator vessel 15 to CO₂ absorber vessel 1. The absorption process being exothermic and the regeneration process being endothermic, and said processes typically being operated at substantially different temperatures, allows for heat recovery which may improve the performance of the system 30. Thus, CO₂ rich ammonia-comprising medium, including dissolved or solid carbonate or bicarbonate of ammonium, from CO₂ absorber vessel 1 in fluidly connected line 16 is heat exchanged in one or more heat exchangers (not shown) with regenerated CO₂ lean ammonia-comprising medium from regenerator 15 in fluidly connected line 18 so that heat is recovered from the hot CO₂ lean ammonia-comprising medium transferred from the bottom portion 15a of regenerator vessel 15 to CO₂ absorber vessel 1.

### EXAMPLES

### Example 1: Investigation of the correlation

To investigate the correlation found by the present inventors among the temperature of regenerated CO₂ lean ammonia-comprising medium present in the sump 15c of the regeneration vessel 15, the operating pressure of the regeneration vessel 15 and the mole ratio of ammonia to CO₂ of the CO₂ lean ammonia-comprising medium and/or regenerated CO₂ lean ammonia-comprising medium, for the chilled ammonia CO₂ capture process laid out herein, a rigorous set of thermodynamic properties based on laboratory measurements and experimental measurements found in literature and scientific articles has been implemented into ASPEN Plus@ databanks. Parameters for physical properties such as enthalpy, heat capacity, viscosity, density, and surface tension were regressed. Thermodynamic properties are of fundamental importance to understand how systems 30 respond to physical change.

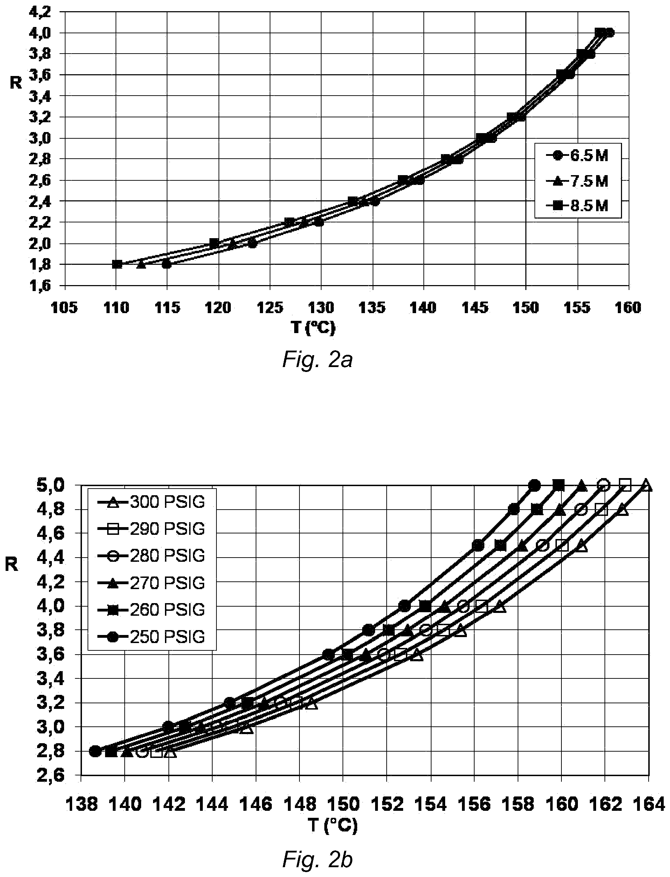

Figure 2a illustrates the relationship between the *R* value (the mole ratio of ammonia to CO₂ of the CO₂ lean ammonia-comprising medium and/or regenerated CO₂ lean ammonia-comprising medium brought in contact with the flue gas in absorption vessel 1 of the disclosed process) and the temperature (°C) of the regenerated CO₂ lean ammonia-comprising medium present in the sump 15c of the regeneration vessel 15, at an operating pressure of the regeneration vessel 15 of 300 psig (20.7 barg) for different solution molarities (different ammonia concentrations of the regenerated CO₂ lean ammonia-comprising medium, circles = 6.5 M, triangles = 7.5 M, squares = 8.5 M).

Figure 2b illustrates the relationship between the *R* value (the mole ratio of ammonia to CO₂ of the CO₂ lean ammonia-comprising medium and/or regenerated CO₂ lean ammonia-comprising medium brought in contact with the flue gas in absorber vessel 1 of the disclosed process) and the temperature (°C) of regenerated CO₂ lean ammonia-comprising medium present in the sump 15c of the regeneration vessel 15, at an ammonia concentration of the regenerated CO₂ lean ammonia-comprising medium of 8.5 M for different operating pressure of the regeneration vessel 15 (open triangles = 300 psig (20.7 barg), open squares = 290 psig (19.9 barg), open circles = 280 psig (19.3 barg), filled triangles = 270 psig (18.6 barg), filled squares = 260 psig (17.9 barg), filled circles = 250 psig (17.2 barg)).

Use of a graph such as those of Figures 2a or 2b provides a quick way of estimating the desired *R* value, without using an analytical method, at the operating pressure of the regenerator vessel 15 and the temperature of the sump 15c regenerated CO₂ lean ammonia-comprising medium for a given molarity of feed stream. For example, if an *R* value of 3.2 from a solution molarity of 8.5 M at operating pressure 300 psig (20.7 barg) is desired, the set point of the sump 15c temperature control unit is adjusted to about 300 °F (149 °C) as provided in the graph of Figure 2a.

The correlation is provided for an operating pressure of 5 to 30 barg, an *R* value of 3 to 6 (corresponding to a loading of 0.16 to 0.33), and a molarity of 4 to 10 mol/1.

Example 2: The control concept using the correlation is validated at different chilled ammonia process CO₂ capture pilot plants

The correlation modeled in Example 1 between sump 15c temperature and *R* value at operating pressure was validated using experimental data from CO₂ capture pilot plants operated according to the system and process described herein.

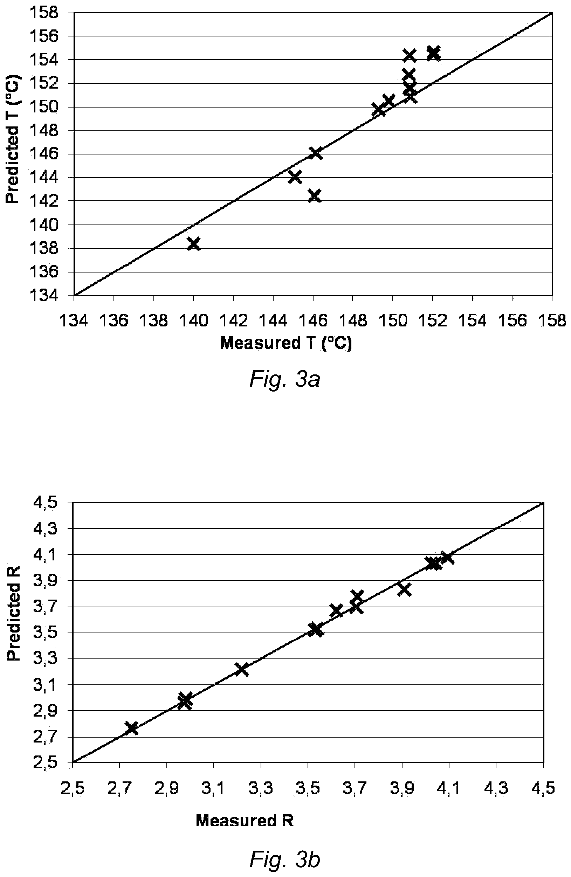

Figure 3a illustrates a comparison of the model prediction of the sump 15c temperature with experimental data from pilot plants. The Aspen Plus® model reproduces the experimental data reasonably well for all pilot plants.

Figure 3b confirms that the Aspen Plus® model predictions show agreement with experimentally measured *R* values for all pilot plants, thus confirming CO₂ mass balance closure for both simulation and reconciled pilot plant data.

### Example 3: Ammonia emissions

Ammonia emissions from the CO₂ absorber vessel 1, i.e., ammonia carried over from the CO₂ lean ammonia-comprising medium and being present in the CO₂ depleted flue gas after CO₂ absorption, were measured at a CO₂ capture pilot plant operated according to the system and process described herein.

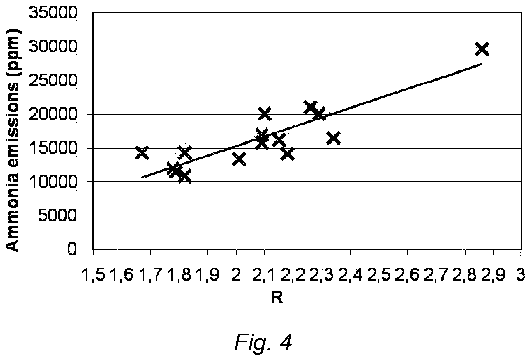

Figure 4 illustrates the relationship between ammonia emissions from the CO₂ absorber vessel 1 for different *R* values of the CO₂ lean ammonia-comprising medium and/or regenerated CO₂ lean ammonia-comprising medium brought into contact with the flue gas. As stated above, ammonia slip from the absorber vessel 1 is strongly related to the *R* value of the CO₂ lean ammonia-comprising medium and/or regenerated CO₂ lean ammonia-comprising medium brought into contact with the flue gas. Accordingly, acceptable ammonia emissions may be obtained through identification of a corresponding *R* value.

## Claims

1. A process of CO₂ removal from a flue gas comprising:
(a) contacting in an absorber (1) a flue gas comprising CO₂ with a CO₂ lean ammonia-comprising medium and/or regenerated CO₂ lean ammonia-comprising medium having an ammonia concentration, to absorb CO₂ from said flue gas into said CO₂ lean ammonia-comprising medium and/or regenerated CO₂ lean ammonia-comprising medium to produce a CO₂ rich ammonia-comprising medium;
(b) heating the CO₂ rich ammonia-comprising medium, using a heating medium, to release CO₂ from said CO₂ rich ammonia-comprising medium to produce a regenerated CO₂ lean ammonia-comprising medium, the heating taking place at an operating pressure in a regeneration vessel (15) having a sump (15c);
(c) supplying the regenerated CO₂ lean ammonia-comprising medium to said absorber (1);
(d) identifying a desired mole ratio of ammonia to CO₂ of the CO₂ lean ammonia-comprising medium and/or regenerated CO₂ lean ammonia-comprising medium brought into contact with the flue gas to control a CO₂ capture rate of said absorber (1) and/or to control ammonia emissions from said absorber (1);
(e) predicting a desired temperature of regenerated CO₂ lean ammonia-comprising medium present in the sump (15c) of the regeneration vessel (15) by means of the ammonia concentration of the CO₂ lean ammonia-comprising medium and/or regenerated CO₂ lean ammonia-comprising medium, the operating pressure of the regeneration vessel (15) and the identified desired mole ratio;
(f) controlling the temperature of regenerated CO₂ lean ammonia-comprising medium present in the sump (15c) of the regeneration vessel (15) based on the predicted desired temperature; and
(g) using a control unit to adjust a regulating valve (26), arranged to control a flow of the heating medium, based on a signal of a NH₃ concentration indictor representing the NH₃ concentration of flue gas leaving the CO₂ absorber.

2. The process according to claim 1, wherein the identification of the desired mole ratio comprises determining a volume flow rate of CO₂ entering said absorber (1) in the flue gas and a volume flow rate of CO₂ released from said regeneration vessel (15).

3. The process according to claim 1, wherein the identification of the desired mole ratio comprises determining the CO₂ concentration of flue gas entering said absorber (1) and the CO₂ concentration of flue gas leaving said absorber (1).

4. The process according to claim 1, wherein the identification of the desired mole ratio comprises determining the ammonia concentration of flue gas leaving said absorber (1).

5. The process according to claim 1, wherein the desired mole ratio is used to control a CO₂ capture rate of said absorber (1).

6. The process according to claim 1, wherein the desired mole ratio is identified and used to control ammonia emissions from said absorber (1).

7. A process of CO₂ removal from a flue gas comprising:
(a) contacting in an absorber (1) a flue gas comprising CO₂ with aCO₂ lean ammonia-comprising medium and/or regenerated CO₂ lean ammonia-comprising medium having an ammonia concentration, to absorb CO₂ from said flue gas into said CO₂ lean ammonia-comprising medium and/or regenerated CO₂ lean ammonia-comprising medium to produce a CO₂ rich ammonia-comprising medium;
(b) heating the CO₂ rich ammonia-comprising medium, using a heating medium, to release CO₂ from said CO₂ rich ammonia-comprising medium to produce regenerated CO₂ lean ammonia-comprising medium, the heating taking place at an operating pressure in a regeneration vessel (15) having a sump (15c);
(c) supplying the regenerated CO₂ lean ammonia-comprising medium to said absorber (1);
(d) identifying a desired mole ratio of ammonia to CO₂ of the CO₂ lean ammonia-comprising medium and/or regenerated CO₂ lean ammonia-comprising medium brought into contact with the flue gas to control a CO₂ capture rate of said absorber (1) and/or to control ammonia emissions from said absorber (1);
(e) predicting a desired operating pressure of the regeneration vessel (15) by means of the ammonia concentration of the CO₂ lean ammonia-comprising medium and/or regenerated CO₂ lean ammonia-comprising medium, the temperature of regenerated CO₂ lean ammonia-comprising medium present in the sump (15c) of the regeneration vessel (15) and the identified desired mole ratio;
(f) controlling the operating pressure of the regeneration vessel (15) based on the predicted desired operating pressure; and
(g) using a control unit to adjust a regulating valve (26), arranged to control a flow of the heating medium, based on a signal of a NH₃ concentration indictor representing the NH₃ concentration of flue gas leaving the CO₂ absorber.

8. The process according to claim 7, wherein the identification of the desired mole ratio comprises determining a volume flow rate of CO₂ entering said absorber (1) in the flue gas and a volume flow rate of CO₂ released from said regeneration vessel (15).

9. The process according to claim 7, wherein the identification of the desired mole ratio comprises determining the CO₂ concentration of flue gas entering said absorber (1) and the CO₂ concentration of flue gas leaving said absorber (1).

10. The process according to claim 7, wherein the identification of the desired mole ratio comprises determining the ammonia concentration of flue gas leaving said absorber (1).

11. The process according to claim 7, wherein the desired mole ratio is used to control a CO₂ capture rate of said absorber (1).

12. The process according to claim 7, wherein the desired mole ratio is identified and used to control ammonia emissions from said absorber (1).

13. A system for removal of CO₂ from a flue gas, the system comprising:
a CO₂ absorber (1) adapted to contact a flue gas with CO₂ lean ammonia-comprising medium and/or regenerated CO₂ lean ammonia-comprising medium having an ammonia concentration, a regeneration vessel (15) adapted to heat CO₂ rich ammonia-comprising medium from the CO₂ absorber (1) at an operation pressure, a heating circuit arranged to provide a heating medium to the regeneration vessel (15), and piping arranged to pass CO₂ rich ammonia-comprising medium from the CO₂ absorber (1) to the regeneration vessel (15) and to pass regenerated CO₂ lean ammonia-comprising medium from the regeneration vessel (15) to the CO₂ absorber (1);
wherein the system further comprises a regulating valve (26) arranged to control a flow of heating medium in the heating circuit, a pressure indicator (25) arranged to provide a signal representing the operating pressure of the regeneration vessel (15), and a control unit arranged to receive the signal from the pressure indicator (25), a signal representing the ammonia concentration of the CO₂ lean ammonia-comprising medium and/or regenerated CO₂ lean ammonia-comprising medium and a signal representing a desired mole ratio of ammonia to CO₂ of the CO₂ lean ammonia-comprising medium and/or regenerated CO₂ lean ammonia-comprising medium brought in contact with the flue gas in the CO₂ absorber (1) required to maintain process conditions, to determine an adjustment for the regulating valve (26) based on the signals received, and to provide the regulating valve (26) with a signal corresponding to the determined adjustment; and
wherein the system further comprises a NH₃ concentration indicator (7) arranged to provide a signal representing the NH₃ concentration of flue gas leaving the CO₂ absorber (1), the control unit being further arranged to receive said signal and to determine the adjustment for the regulating valve (26) based additionally on said signal received.

14. The system according to claim 13, further comprising a gas flow rate indicator (4) and a CO₂ concentration indicator (5) arranged to provide signals representing a flow rate of flue gas to the CO₂ absorber (1) and the CO₂ concentration of said flue gas, respectively, and a gas flow rate indicator (22) arranged to provide a signal representing a flow rate of gas leaving the regeneration vessel (15), the control unit being further arranged to receive said signals and to determine the signal representing a desired mole ratio of ammonia to CO₂ of the CO₂ lean ammonia-comprising medium and/or regenerated CO₂ lean ammonia-comprising medium brought in contact with the flue gas by the CO₂ absorber (1) based on said signals received.

15. The system according to claim 13, further comprising a gas flow rate indicator and a CO₂ concentration indicator (6) arranged to provide signals representing a flow rate of flue gas leaving the CO₂ absorber (1) and the CO₂ concentration of said flue gas, respectively, the control unit being further arranged to receive said signals and to determine the signal representing a desired mole ratio of ammonia to CO₂ of the CO₂ lean ammonia-comprising medium and/or regenerated CO₂ lean ammonia-comprising medium brought in contact with the flue gas by the CO₂ absorber (1) based on said signals received.

## Patentansprüche

1. Verfahren zur CO₂-Absorption aus einem Rauchgas, umfassend:
(a) in einem Absorber (1), Inkontaktbringen eines Rauchgases, das CO₂ mit einem CO₂-armen ammoniakhaltigen Medium und/oder regenerierten CO₂-armen ammoniakhaltigen Medium mit einer Ammoniakkonzentration zum Absorbieren von CO₂ aus dem Rauchgas in das CO₂-arme ammoniakhaltige Medium und/oder regenerierte CO₂-arme ammoniakhaltige Medium zum Erzeugen eines CO₂-reichen ammoniakhaltigen Mediums aufweist, umfasst;
(b) Erhitzen des CO₂-reichen ammoniakhaltigen Mediums mithilfe eines Heizmediums zum Freigeben von CO₂ aus dem CO₂-reichen ammoniakhaltigen Medium zum Erzeugen eines regenerierten CO₂-armen ammoniakhaltigen Mediums, wobei das Erhitzen bei einem Betriebsdruck in einem Regenerationsbehälter (15) mit einem Sumpf (15c) erfolgt;
(c) Zuführen des regenerierten CO₂-armen ammoniakhaltigen Mediums zum Absorber (1);
(d) Identifizieren eines gewünschten Molverhältnisses zwischen Ammoniak und dem CO₂ des CO₂-armen ammoniakhaltigen Mediums und/oder des regenerierten CO₂-armen ammoniakhaltigen Mediums in Kontakt mit dem Rauchgas zum Steuern einer CO₂-Erfassungsrate des Absorbers (1) und/oder zum Steuern der Ammoniakemissionen aus dem Absorber (1);
(e) Vorhersagen einer gewünschten Temperatur von regeneriertem CO₂-armen ammoniakhaltigen Medium, das in dem Sumpf (15c) des Regenerationsbehälters (15) mittels der Ammoniakkonzentration des CO₂-mageren ammoniakhaltigen Mediums und/oder des regenerierten CO₂-armen ammoniakhaltigen Mediums und des Betriebsdrucks des Regenerationsbehälters (15) und des identifizierten Molverhältnisses;
(f) Steuern der Temperatur des regenerierten CO₂-armen ammoniakhaltigen Mediums im Sumpf (15c) des Regenerationsbehälters (15) basierend auf der vorhergesagten gewünschten Temperatur; und
(g) Verwenden einer Steuereinheit zum Einstellen eines Regelventils (26), das zum Steuern einer Strömung des Heizmediums basierend auf einem Signal einer NH₃-Konzentrationsanzeige angeordnet ist, das die NH₃-Konzentration des Rauchgases, das den CO₂-Absorber verlässt, repräsentiert.

2. Verfahren nach Anspruch 1, wobei die Identifikation des gewünschten Molverhältnisses das Bestimmen einer Volumenströmungsrate von CO₂, das in den Absorber (1) eintritt, im Rauchgas und eine Volumenströmungsrate von CO₂, das von dem Regenerationsbehälter (15) freigesetzt wird, umfasst.

3. Verfahren nach Anspruch 1, wobei die Identifikation des gewünschten Molverhältnisses das Bestimmen der CO₂-Konzentration des Rauchgases, das in den Absorber (1) eintritt, und der CO₂-Konzentration des Rauchgases, welches den Regenerationsbehälter (1) verlässt, umfasst.

4. Verfahren nach Anspruch 1, wobei die Identifikation des gewünschten Molverhältnisses das Bestimmen der Ammoniakkonzentration des Rauchgases, das den Absorber (1) verlässt, umfasst.

5. Verfahren nach Anspruch 1, wobei das gewünschte Molverhältnis verwendet wird, um einen CO₂-Abscheidegrad aus dem Absorber (1) zu steuern.

6. Verfahren nach Anspruch 1, wobei das gewünschte Molverhältnis identifiziert und verwendet wird, um die Ammoniakemissionen aus dem Absorber (1) zu steuern.

7. Verfahren zur CO₂-Absorption aus einem Rauchgas, umfassend:
(a) in einem Absorber (1), Inkontaktbringen eines Rauchgases, das CO₂ mit einem CO₂-armen ammoniakhaltigen Medium und/oder regenerierten CO₂-armen ammoniakhaltigen Medium mit einer Ammoniakkonzentration zum Absorbieren von CO₂ aus dem Rauchgas in das CO₂-arme ammoniakhaltige Medium und/oder regenerierte CO₂-arme ammoniakhaltige Medium zum Erzeugen eines CO₂-reichen ammoniakhaltigen Mediums aufweist, umfasst;
(b) Erhitzen des CO₂-reichen ammoniakhaltigen Mediums mithilfe eines Heizmediums zum Freigeben von CO₂ aus dem CO₂-reichen ammoniakhaltigen Medium zum Erzeugen eines regenerierten CO₂-armen ammoniakhaltigen Mediums, wobei das Erhitzen bei einem Betriebsdruck in einem Regenerationsbehälter (15) mit einem Sumpf (15c) erfolgt;
(c) Zuführen des regenerierten CO₂-armen ammoniakhaltigen Mediums zum Absorber (1);
(d) Identifizieren eines gewünschten Molverhältnisses zwischen Ammoniak und dem CO₂ des CO₂-armen ammoniakhaltigen Mediums und/oder des regenerierten CO₂-armen ammoniakhaltigen Mediums in Kontakt mit dem Rauchgas zum Steuern einer CO₂-Erfassungsrate des Absorbers (1) und/oder zum Steuern der Ammoniakemissionen aus dem Absorber (1);
(e) Vorhersagen eines gewünschten Betriebsdrucks des Regenerationsbehälters (15) mittels der Ammoniakkonzentration des CO₂-armen ammoniakhaltigen Mediums und/oder regenerierten CO₂-armen ammoniakhaltigen Mediums, der Temperatur des regenerierten CO₂-armen
ammoniakhaltigen Mediums, das in dem Sumpf (15c) des Regenerationsbehälters (15) vorliegt, und des identifizierten gewünschten Molverhältnisses;
(f) Steuern des Betriebsdrucks des Regenerationsbehälters (15) basierend auf dem vorhergesagten gewünschten Betriebsdruck; und
(g) Verwenden einer Steuereinheit zum Einstellen eines Regelventils (26), das zum Steuern einer Strömung des Heizmediums basierend auf einem Signal einer NH₃-Konzentrationsanzeige angeordnet ist, das die NH₃-Konzentration des Rauchgases, das den CO₂-Absorber verlässt, repräsentiert.

8. Verfahren nach Anspruch 7, wobei die Identifikation des gewünschten Molverhältnisses das Bestimmen einer Volumenströmungsrate von CO₂, das in den Absorber (1) eintritt, im Rauchgas und eine Volumenströmungsrate von CO₂, das von dem Regenerationsbehälter (15) freigesetzt wird, umfasst.

9. Verfahren nach Anspruch 7, wobei die Identifikation des gewünschten Molverhältnisses das Bestimmen der CO₂-Konzentration des Rauchgases, das in den Absorber (1) eintritt, und der CO₂-Konzentration des Rauchgases, welches den Regenerationsbehälter (1) verlässt, umfasst.

10. Verfahren nach Anspruch 7, wobei die Identifikation des gewünschten Molverhältnisses das Bestimmen der Ammoniakkonzentration des Rauchgases, das den Absorber (1) verlässt, umfasst.

11. Verfahren nach Anspruch 7, wobei das gewünschte Molverhältnis verwendet wird, um einen CO₂-Abscheidegrad aus dem Absorber (1) zu steuern.

12. Verfahren nach Anspruch 7, wobei das gewünschte Molverhältnis identifiziert und verwendet wird, um die Ammoniakemissionen aus dem Absorber (1) zu steuern.

13. System zur CO₂-Absorption aus einem Rauchgas, wobei das System umfasst:
einen CO₂-Absorber (1), der zum Inkontakttreten mit einem Rauchgas mit CO₂-armem ammoniakhaltigen Medium und/oder regeneriertem CO₂-armen ammoniakhaltigen Medium mit einer Ammoniakkonzentration ausgelegt ist,
einen Regenerationsbehälter (15), der zum Erhitzen des CO₂-reichen ammoniakhaltigen Mediums aus dem CO₂-Absorber (1) bei einem Betriebsdruck ausgelegt ist,
einen Heizkreis, der zum Bereitstellen eines Heizmediums an den Regenerationsbehälter (15) angeordnet ist, und Rohre, die zum Leiten von CO₂-reichem ammoniakhaltigen Medium aus dem CO₂-Absorber (1) zum Regenerationsbehälter (15)
und zum Leiten von regeneriertem CO₂-armen ammoniakhaltigen Medium aus dem Regenerationsbehälter (15) in den CO₂-Absorber (1) ausgelegt sind;
wobei das System ferner ein Regelventil (26) umfasst, das zum Steuern einer Strömung von Heizmedium im Heizkreis angeordnet ist, eine Druckanzeige (25), die zum Bereitstellen eines Signals angeordnet ist, das den Betriebsdruck des Regenerationsbehälters (15) repräsentiert, und eine Steuereinheit, die zum Empfangen des Signals aus der Druckanzeige (25) angeordnet ist, ein Signal, das die Ammoniakkonzentration des CO₂-armen ammoniakhaltigen Mediums und/oder regenerierten CO₂-armen ammoniakhaltigen Mediums repräsentiert, und ein Signal, das ein gewünschtes Molverhältnis von Ammoniak zu CO₂ des CO₂-armen ammoniakhaltigen Mediums und/oder regenerierten CO₂-armen ammoniakhaltigen Mediums repräsentiert, die mit dem Rauchgas im CO₂-Absorber (1) in Kontakt gebracht wurden und zum Beibehalten der Verfahrensbedingungen erforderlich sind, um eine Einstellung des Regelventils (26) basierend auf den empfangenen Signalen bereitzustellen und um dem Regelventil (26) ein Signal, das einer vorbestimmten Einstellung entspricht, bereitzustellen; und
wobei das System ferner eine NH₃-Konzentrationsanzeige (7) umfasst, die zum Bereitstellen eines Signals angeordnet ist, das die NH₃-Konzentration von Rauchgas, das den CO₂-Absorber (1) verlässt, repräsentiert, wobei die Steuereinheit ferner zum Empfangen des Signals und zum Bestimmen der Einstellung für das Regelventil (26) zusätzlich basierend auf dem empfangenen Signal angeordnet ist.

14. System nach Anspruch 13, ferner umfassend eine Gasflussratenanzeige (4) und eine CO₂-Konzentrationsanzeige (5), die zum Bereitstellen von Signalen angeordnet sind, die eine Flussrate von Rauchgas zum CO₂-Absorber (1) bzw. die CO₂-Konzentration des Rauchgases repräsentieren und eine Gasflussratenanzeige (22), die zum Bereitstellen eines Signals angeordnet ist, das eine Flussrate von Gas repräsentiert, das den Regenerationsbehälter (15) verlässt, wobei die Steuereinheit ferner angeordnet ist, um die Signale zu empfangen und das Signal zu bestimmen, das ein gewünschtes Molverhältnis von Ammoniak zu CO₂ des CO₂-armen ammoniakhaltigen Mediums und/oder regenerierten CO₂-armen ammoniakhaltigen Mediums repräsentiert, die mit dem Rauchgas über den CO₂-Absorber (1) basierend auf den empfangenen Signalen in Kontakt gebracht wurden.

15. System nach Anspruch 13, ferner umfassend eine Gasflussratenanzeige und eine CO₂-Konzentrationsanzeige (6), die zum Bereitstellen von Signalen angeordnet sind, die eine Flussrate von Rauchgas, das den CO₂-Absorber (1) verlässt, bzw. die CO₂-Konzentration des Rauchgases repräsentieren, wobei die Steuereinheit ferner angeordnet ist, um die Signale zu empfangen und das Signal zu bestimmen, das ein gewünschtes Molverhältnis von Ammoniak zu CO₂ des CO₂-armen ammoniakhaltigen Mediums und/oder regenerierten CO₂-armen ammoniakhaltigen Mediums repräsentiert, die mit dem Rauchgas über den CO₂-Absorber (1) basierend auf den empfangenen Signalen in Kontakt gebracht wurden.

## Revendications

1. Procédé de retrait de CO₂ d'un gaz de combustion comprenant :
(a) la mise en contact, dans un absorbeur (1), d'un gaz de combustion comprenant du CO₂ avec un milieu comprenant de l'ammoniac pauvre en CO₂ et/ou un milieu comprenant de l'ammoniac pauvre en CO₂ régénéré ayant une concentration d'ammoniac, pour absorber du CO₂ issu dudit gaz de combustion dans ledit milieu comprenant de l'ammoniac pauvre en CO₂ et/ou ledit milieu comprenant de l'ammoniac pauvre en CO₂ régénéré afin de produire un milieu comprenant de l'ammoniac riche en CO₂ ;
(b) le chauffage du milieu comprenant de l'ammoniac riche en CO₂, au moyen d'un milieu chauffant, pour libérer du CO₂ dudit milieu comprenant de l'ammoniac riche en CO₂ afin de produire un milieu comprenant de l'ammoniac pauvre en CO₂ régénéré, le chauffage ayant lieu à une pression de fonctionnement dans une cuve de régénération (15) comportant un puisard (15c) ;
(c) la délivrance du milieu comprenant de l'ammoniac pauvre en CO₂ régénéré audit absorbeur (1) ;
(d) l'identification d'un rapport molaire souhaité entre ammoniac et CO₂ du milieu comprenant de l'ammoniac pauvre en CO₂ et/ou du milieu comprenant de l'ammoniac pauvre en CO₂ régénéré mis en contact avec le gaz de combustion pour réguler une vitesse de capture de CO₂ dudit absorbeur (1) et/ou pour réguler les émissions d'ammoniac à partir dudit absorbeur (1) ;
(e) la prédiction d'une température souhaitée du milieu comprenant de l'ammoniac pauvre en CO₂ régénéré présent dans le puisard (15c) de la cuve de régénération (15) au moyen de la concentration d'ammoniac du milieu comprenant de l'ammoniac pauvre en CO₂ et/ou du milieu comprenant de l'ammoniac pauvre en CO₂ régénéré, de la pression de fonctionnement de la cuve de régénération (15) et du rapport molaire souhaité identifié ;
(f) la régulation de la température du milieu comprenant de l'ammoniac pauvre en CO₂ régénéré présent dans le puisard (15c) de la cuve de régénération (15) en fonction de la température souhaitée prédite ; et
(g) l'utilisation d'une unité de commande pour ajuster une vanne de réglage (26), agencée pour réguler un écoulement du milieu chauffant, en fonction d'un signal d'un indicateur de concentration de NH₃ représentant la concentration de NH₃ du gaz de combustion quittant l'absorbeur de CO₂.

2. Procédé selon la revendication 1, dans lequel l'identification du rapport molaire souhaité comprend la détermination d'un débit volumique de CO₂ pénétrant dans ledit absorbeur (1) dans le gaz de combustion et d'un débit volumique de CO₂ libéré de ladite cuve de régénération (15).

3. Procédé selon la revendication 1, dans lequel l'identification du rapport molaire souhaité comprend la détermination de la concentration de CO₂ du gaz de combustion pénétrant dans ledit absorbeur (1) et de la concentration de CO₂ du gaz de combustion quittant ledit absorbeur (1).

4. Procédé selon la revendication 1, dans lequel l'identification du rapport molaire souhaité comprend la détermination de la concentration d'ammoniac du gaz de combustion quittant ledit absorbeur (1).

5. Procédé selon la revendication 1, dans lequel le rapport molaire souhaité est utilisé pour réguler une vitesse de capture de CO₂ dudit absorbeur (1).

6. Procédé selon la revendication 1, dans lequel le rapport molaire souhaité est identifié et utilisé pour réguler les émissions d'ammoniac à partir dudit absorbeur (1).

7. Procédé de retrait de CO₂ d'un gaz de combustion comprenant :
(a) la mise en contact, dans un absorbeur (1), d'un gaz de combustion comprenant du CO₂ avec un milieu comprenant de l'ammoniac pauvre en CO₂ et/ou un milieu comprenant de l'ammoniac pauvre en CO₂ régénéré ayant une concentration d'ammoniac, pour absorber du CO₂ issu dudit gaz de combustion dans ledit milieu comprenant de l'ammoniac pauvre en CO₂ et/ou ledit milieu comprenant de l'ammoniac pauvre en CO₂ régénéré afin de produire un milieu comprenant de l'ammoniac riche en CO₂ ;
(b) le chauffage du milieu comprenant de l'ammoniac riche en CO₂, au moyen d'un milieu chauffant, pour libérer du CO₂ dudit milieu comprenant de l'ammoniac riche en CO₂ afin de produire un milieu comprenant de l'ammoniac pauvre en CO₂ régénéré, le chauffage ayant lieu à une pression de fonctionnement dans une cuve de régénération (15) comportant un puisard (15c) ;
(c) la délivrance du milieu comprenant de l'ammoniac pauvre en CO₂ régénéré audit absorbeur (1) ;
(d) l'identification d'un rapport molaire souhaité entre ammoniac et CO₂ du milieu comprenant de l'ammoniac pauvre en CO₂ et/ou du milieu comprenant de l'ammoniac pauvre en CO₂ régénéré mis en contact avec le gaz de combustion pour réguler une vitesse de capture de CO₂ dudit absorbeur (1) et/ou pour réguler les émissions d'ammoniac à partir dudit absorbeur (1) ;
(e) la prédiction d'une pression de fonctionnement souhaitée de la cuve de régénération (15) au moyen de la concentration d'ammoniac du milieu comprenant de l'ammoniac pauvre en CO₂ et/ou du milieu comprenant de l'ammoniac pauvre en CO₂ régénéré, de la température du milieu comprenant de l'ammoniac pauvre en CO₂ régénéré présent dans le puisard (15c) de la cuve de régénération (15) et du rapport molaire souhaité identifié ;
(f) la régulation de la pression de fonctionnement de la cuve de régénération (15) en fonction de la pression de fonctionnement souhaitée prédite ; et
(g) l'utilisation d'une unité de commande pour ajuster une vanne de réglage (26), agencée pour réguler un écoulement du milieu chauffant, en fonction d'un signal d'un indicateur de concentration de NH₃ représentant la concentration de NH₃ du gaz de combustion quittant l'absorbeur de CO₂.

8. Procédé selon la revendication 7, dans lequel l'identification du rapport molaire souhaité comprend la détermination d'un débit volumique de CO₂ pénétrant dans ledit absorbeur (1) dans le gaz de combustion et d'un débit volumique de CO₂ libéré de ladite cuve de régénération (15).

9. Procédé selon la revendication 7, dans lequel l'identification du rapport molaire souhaité comprend la détermination de la concentration de CO₂ du gaz de combustion pénétrant dans ledit absorbeur (1) et de la concentration de CO₂ du gaz de combustion quittant ledit absorbeur (1).

10. Procédé selon la revendication 7, dans lequel l'identification du rapport molaire souhaité comprend la détermination de la concentration d'ammoniac du gaz de combustion quittant ledit absorbeur (1).

11. Procédé selon la revendication 7, dans lequel le rapport molaire souhaité est utilisé pour réguler une vitesse de capture de CO₂ dudit absorbeur (1).

12. Procédé selon la revendication 7, dans lequel le rapport molaire souhaité est identifié et utilisé pour réguler les émissions d'ammoniac à partir dudit absorbeur (1).

13. Système de retrait de CO₂ d'un gaz de combustion, le système comprenant :
un absorbeur de CO₂ (1) adapté pour mettre en contact un gaz de combustion avec un milieu comprenant de l'ammoniac pauvre en CO₂ et/ou un milieu comprenant de l'ammoniac pauvre en CO₂ régénéré, une cuve de régénération (15) adaptée pour chauffer le milieu comprenant de l'ammoniac riche en CO₂ provenant de l'absorbeur de CO₂ (1) à une pression de fonctionnement, un circuit de chauffage agencé pour délivrer un milieu chauffant à la cuve de régénération (15), et une tuyauterie agencée pour faire passer le milieu comprenant de l'ammoniac riche en CO₂ de l'absorbeur de CO₂ (1) à la cuve de régénération (15) et pour faire passer le milieu comprenant de l'ammoniac pauvre en CO₂ régénéré de la cuve de régénération (15) à l'absorbeur de CO₂ (1) ;
le système comprenant en outre une vanne de réglage (26) agencée pour réguler un écoulement de milieu chauffant dans le circuit de chauffage, un indicateur de pression (25) agencé pour délivrer un signal représentant la pression de fonctionnement de la cuve de régénération (15), et une unité de commande agencée pour recevoir le signal provenant de l'indicateur de pression (25), un signal représentant la concentration d'ammoniac du milieu comprenant de l'ammoniac pauvre en CO₂ et/ou du milieu comprenant de l'ammoniac pauvre en CO₂ régénéré et un signal représentant un rapport molaire souhaité entre ammoniac et CO₂ du milieu comprenant de l'ammoniac pauvre en CO₂ et/ou du milieu comprenant de l'ammoniac pauvre en CO₂ régénéré mis en contact avec le gaz de combustion dans l'absorbeur de CO₂ (1) nécessaire pour maintenir les conditions du procédé, afin de déterminer un ajustement pour la vanne de réglage (26) en fonction des signaux reçus, et de délivrer à la vanne de réglage (26) un signal correspondant à l'ajustement déterminé ; et
le système comprenant en outre un indicateur de concentration de NH₃ (7) agencé pour délivrer un signal représentant la concentration de NH₃ du gaz de combustion quittant l'absorbeur de CO₂ (1), l'unité de commande étant en outre agencée pour recevoir ledit signal et pour déterminer l'ajustement pour la vanne de réglage (26) également en fonction dudit signal reçu.

14. Système selon la revendication 13, comprenant en outre un indicateur de débit de gaz (4) et un indicateur de concentration de CO₂ (5) agencés pour délivrer des signaux représentant respectivement un débit de gaz de combustion atteignant l'absorbeur de CO₂ (1) et la concentration de CO₂ dudit gaz de combustion, et un indicateur de débit de gaz (22) agencé pour délivrer un signal représentant un débit de gaz quittant la cuve de régénération (15), l'unité de commande étant en outre agencée pour recevoir lesdits signaux et pour déterminer le signal représentant un rapport molaire souhaité entre ammoniac et CO₂ du milieu comprenant de l'ammoniac pauvre en CO₂ et/ou du milieu comprenant de l'ammoniac pauvre en CO₂ régénéré mis en contact avec le gaz de combustion par l'absorbeur de CO₂ (1) en fonction desdits signaux reçus.

15. Système selon la revendication 13, comprenant en outre un indicateur de débit de gaz et un indicateur de concentration de CO₂ (6) agencés pour délivrer des signaux représentant respectivement un débit de gaz de combustion quittant l'absorbeur de CO₂ (1) et la concentration de CO₂ dudit gaz de combustion, l'unité de commande étant en outre agencée pour recevoir lesdits signaux et pour déterminer le signal représentant un rapport molaire souhaité entre ammoniac et CO₂ du milieu comprenant de l'ammoniac pauvre en CO₂ et/ou du milieu comprenant de l'ammoniac pauvre en CO₂ régénéré mis en contact avec le gaz de combustion par l'absorbeur de CO₂ (1) en fonction desdits signaux reçus.
